(19) Europäisches Patentamt / European Patent Office / Office européen des brevets

(11) **EP 1 925 959 B1**

(12) **FASCICULE DE BREVET EUROPEEN**

(45) Date de publication et mention
de la délivrance du brevet:
**20.07.2011 Bulletin 2011/29**

(51) Int Cl.:
***G02B 7/185*** (2006.01)

(21) Numéro de dépôt: **07291382.5**

(22) Date de dépôt: **21.11.2007**

(54) **Miroir actif à actionneurs d'application de micro effort**

Aktiver Spiegel mit Stellgliedern, die durch minimalen Kraftaufwand bedient werden können

Active mirror with activators for applying micro-forces

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **23.11.2006 FR 0610268**

(43) Date de publication de la demande:
**28.05.2008 Bulletin 2008/22**

(73) Titulaire: **ISP System**
**65501 Vic-en-Bigorre Cedex (FR)**

(72) Inventeurs:
• **Escolano, Lionnel**
**65500 Siarrouey (FR)**
• **Sauvageot, Paul**
**65500 Camales (FR)**

(74) Mandataire: **Célanie, Christian**
**Cabinet Célanie**
**5 Avenue de Saint Cloud**
**B.P. 214**
**78002 Versailles Cedex (FR)**

(56) Documents cités:
**JP-A- 2002 173 096     US-A- 4 655 563**
**US-A1- 2004 085 657     US-A1- 2004 202 898**

**Description**

Le secteur technique de la présente invention est celui des miroirs actifs, c'est à dire des miroirs dont la courbure peut être modifiée afin de constituer un dispositif de correction et de focalisation d'un faisceau (par exemple un faisceau lumineux, laser, ou tout autre rayonnement).

Les miroirs actifs sont essentiellement utilisés dans le domaine optique (télescopes, microscopes) ou dans le domaine de la recherche avancée (synchrotrons). Les miroirs actifs réfléchissent un faisceau incident, rasant, normal à la surface du miroir ou incliné selon un angle quelconque. Dans ces domaines particuliers, on cherche à déformer un miroir afin de focaliser le faisceau lumineux, de corriger une aberration du faisceau ou de corriger un défaut du miroir.

La modification locale de la pente du miroir est modérée (de l'ordre de quelques milliradians jusqu'au microradian). De plus, les miroirs sont généralement réalisés au moyen d'une plaque mince d'un matériau fragile (par exemple du silicium) dont l'épaisseur n'excède pas 20 à 30 mm. Il est donc essentiel que les déformations du miroir soient extrêmement précises et fines (les efforts appliqués sont généralement compris entre 1 et 100N).

On connaît déjà différents dispositifs de modification active de la géométrie d'un miroir. Un premier type de dispositif est celui mettant en oeuvre des actionneurs piézoélectriques et ferroélectriques.

Tel est le cas du miroir déformable décrit dans le brevet US-4655563. Ces actionneurs répartis et collés tout au long de la surface du miroir permettent de générer un déplacement de la portion du miroir sur laquelle ils sont collés. De tels dispositifs présentent cependant plusieurs inconvénients. Un premier inconvénient réside dans le fait que les actionneurs piézoélectriques génèrent non pas un effort mais un déplacement. Un autre inconvénient encore réside dans le fait que le maintien en position de ces actionneurs nécessite une alimentation continue en électricité et un système de commande en boucle fermée. Un autre inconvénient est lié aux matériaux mis en oeuvre comme la céramique PZT qui engendre un défaut d'hystérésis élevé (de l'ordre de 10 à 20 %). Enfin, un autre inconvénient réside dans le fait que les actionneurs sont collés sur le miroir, ce qui augmente la rigidité locale du miroir et rend la structure hétérogène. Une telle structure engendre des défauts locaux au niveau des électrodes et des joints inter-actionneurs. Ces défauts locaux se traduisent par un effet de lignes et de grilles affectant le faisceau réfléchi.

Un autre type de dispositif est celui consistant à appliquer de part et d'autre du miroir deux couples différents de sorte à provoquer une déformation elliptique du miroir. Les couples appliqués sont générés par des bras de levier ou des ressorts à lame. De tels dispositifs ne sont cependant pas adaptés aux miroirs minces de grandes dimensions. Il devient en effet très difficile de maîtriser les erreurs de pente du miroir dans des zones éloignées des points d'application des couples. De plus, les géométries réalisées avec de tels dispositifs sont nécessairement des géométries simples du type elliptique. De tels dispositifs ne permettent pas non plus de corriger les défauts du miroir, ce qui nécessite l'utilisation de miroir d'excellente qualité optique.

C'est donc le but de la présente invention que de fournir un dispositif ne présentant pas de tels inconvénients et permettant de corriger et de focaliser un faisceau par la déformation d'un miroir.

L'invention a donc pour objet un dispositif de correction et de focalisation d'un faisceau par déformation d'un miroir solidaire d'un bâti comprenant des actionneurs de correction répartis le long du miroir afin d'appliquer des efforts (E) sur différentes zones dudit miroir et un générateur de courbure, caractérisé en ce que le bâti supporte le miroir par l'intermédiaire de ses deux extrémités, la première extrémité étant reliée au bâti par une liaison pivot d'axe horizontal (Y1) pour appliquer un couple (C) à ladite extrémité, la seconde extrémité étant reliée au bâti par une liaison du type à double pivot d'axes parallèles (Y2, Y3) pour appliquer au moins un effort de correction (E) entre les deux extrémités du miroir et en ce que le générateur de courbure applique un couple (C) à la première extrémité du miroir.

Selon une caractéristique de l'invention, la liaison à double pivot est réalisée au moyen d'une lame comportant des strictions.

Selon une autre caractéristique de l'invention, la première extrémité du miroir est maintenue par une mâchoire sur laquelle est fixé un bras de levier et en ce que le générateur de courbure est réalisé au moyen d'un générateur d'effort appliquant sur le bras de levier un effort (F), orthogonal à l'axe (Y1) de la liaison pivot.

Selon encore une autre caractéristique de l'invention, chaque actionneur de correction se présente sous la forme d'un générateur d'effort comportant un corps solidaire du bâti et une tête flottante, fixée au miroir et uniquement soumise à un effort (E) de correction.

Selon une autre caractéristique de l'invention, chaque tête flottante est fixée au miroir par l'intermédiaire d'au moins un patin déformable.

Selon une autre caractéristique de l'invention, l'effort (E) de correction est appliqué sensiblement perpendiculairement au miroir.

Un tout premier avantage du dispositif selon l'invention réside dans le fait qu'il permet de générer des profils de géométries complexes et de corriger les défauts du miroir et/ou les aberrations de faisceau.

Un autre avantage réside dans le fait que le dispositif selon l'invention permet de générer sur le miroir des efforts positifs ou négatifs sur le miroir.

Un autre avantage réside dans le fait que le dispositif selon l'invention permet d'obtenir une grande stabilité de la géométrie du miroir, même en l'absence d'alimentation électrique.

Enfin, un autre avantage du dispositif réside dans le fait qu'il permet de réaliser une gamme de courbures étendue avec des réglages précis.

Enfin, un autre avantage du dispositif réside dans le fait qu'il permet de réaliser une gamme de courbures étendue avec des réglages précis.

D'autres caractéristiques, détails et avantages de l'invention ressortiront plus clairement de la description donnée ci-après à titre indicatif en relation avec des dessins dans lesquels :

- la figure 1 représente en vue de trois quarts face un dispositif de correction et de déformation d'un miroir selon l'invention,
- la figure 2 représente en vue de trois quarts arrière un dispositif de correction et de déformation d'un miroir selon l'invention,
- les figures 3 et 4 représentent en vue en coupe la fixation d'une première extrémité du miroir sur le bâti,
- les figures 5a et 5b représentent en vues en coupe la fixation de la seconde extrémité du miroir sur le bâti, et
- la figure 6 représente en vue en coupe un actionneur de correction agissant sur le miroir.

Le dispositif selon l'invention selon la revendication 1 est adapté pour procéder à la correction et à la déformation d'un miroir plan ou présentant une courbure initiale. Il est également adapté pour toutes géométries de miroir, par exemple rectangulaire, trapézoïdal ou torpédo. Cependant, pour des raison de clarté et de compréhension du principe général de l'invention, les exemples de réalisation mettront en oeuvre un miroir sensiblement plan et horizontal dans sa position de repos. On prendra pour référentiel dans l'ensemble des figures le référentiel lié au miroir où l'axe x est l'axe correspondant à la longueur du miroir (sa plus grande dimension), l'axe y la largeur du miroir et l'axe z la hauteur (ou épaisseur) du miroir. On désignera par X1, X2 ou X3 (respectivement Y1, Y2 ou Y3 et Z1, Z2 et Z3) des axes parallèles à l'axe x (respectivement y et z).

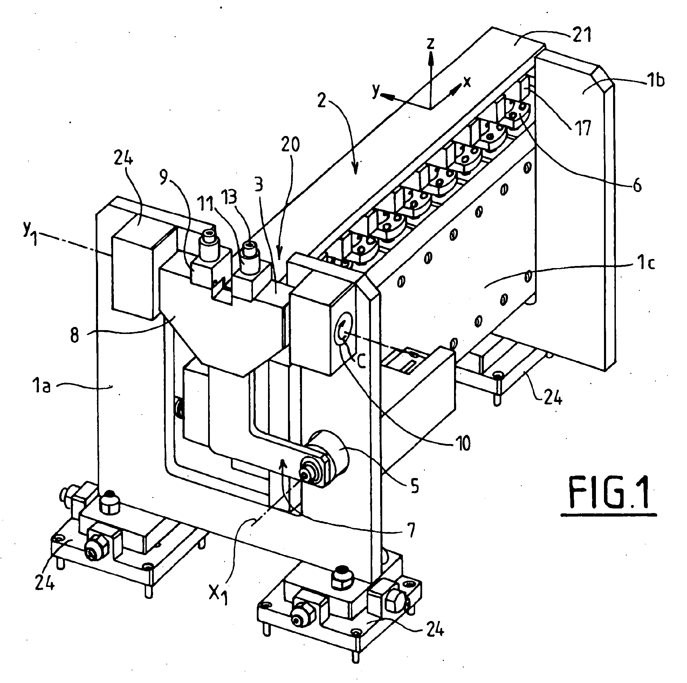

La figure 1 est une représentation en vue de trois quarts face d'un exemple de réalisation d'un dispositif de correction et de déformation d'un miroir selon l'invention. Dans cet exemple de réalisation, le dispositif comporte un bâti 1 sur lequel est fixé un miroir 2, un unique générateur de courbure appliquant un couple C à une extrémité 20 du miroir 2 et plusieurs actionneurs de correction 6, répartis le long du miroir afin d'appliquer des efforts sur différentes zones du miroir 2, par l'intermédiaire de patins 17.

Le bâti 1 comporte deux parois latérales 1a et 1b solidarisées au moyen d'une paroi intermédiaire 1c. La bâti 1 comporte également des pieds 24 permettant la fixation du dispositif sur un support. Le bâti 1 supporte le miroir 2 à ses deux extrémités 20 et 21. La première extrémité 20 du miroir est disposée entre deux mâchoires 8 et 9 dont le serrage est réalisé par des vis 13. Des rondelles élastiques 11 sont intercalées entre chaque tête de vis et la mâchoire supérieure 9. La mâchoire inférieure 8 est reliée au bâti 1 par une liaison pivot d'axe Y1, réalisée au moyen de deux axes 10 pivotant dans des boîtes à roulements 24 solidaires du bâti 1. Une telle réalisation permet avantageusement de réaliser une liaison pivot 10, d'axe Y1 entre la première extrémité 20 du miroir et le bâti 1. Un bras de levier 7 est fixé à la mâchoire inférieure 8 et est soumis à l'action d'un générateur d'effort 5 selon un axe X1. Ainsi, le générateur de courbure est réalisé en combinant le générateur d'effort 5 avec le bras de levier 7. Le générateur d'effort 5 est fixé sur la paroi intermédiaire 1c. La paroi intermédiaire 1c supporte également les actionneurs de correction 6.

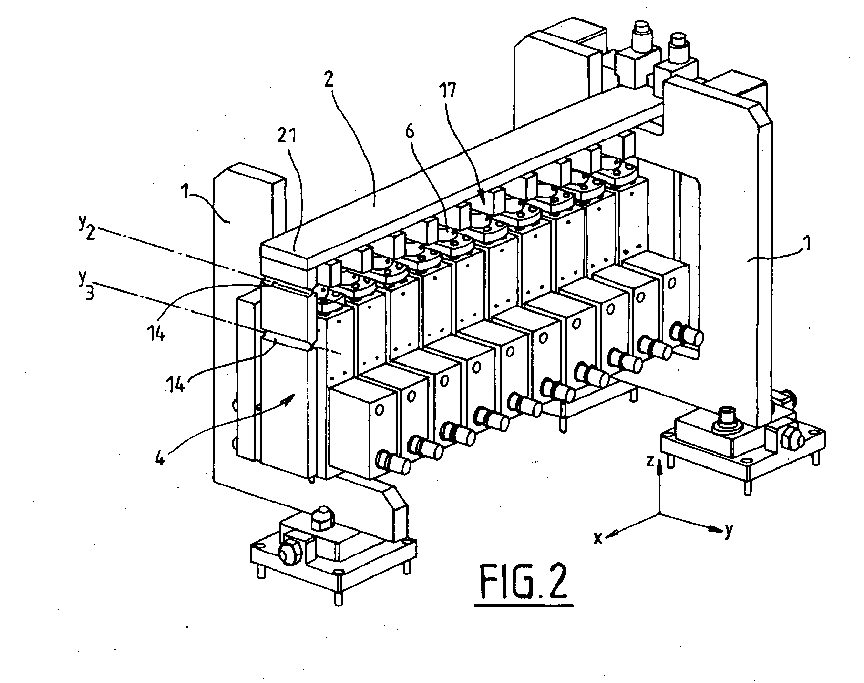

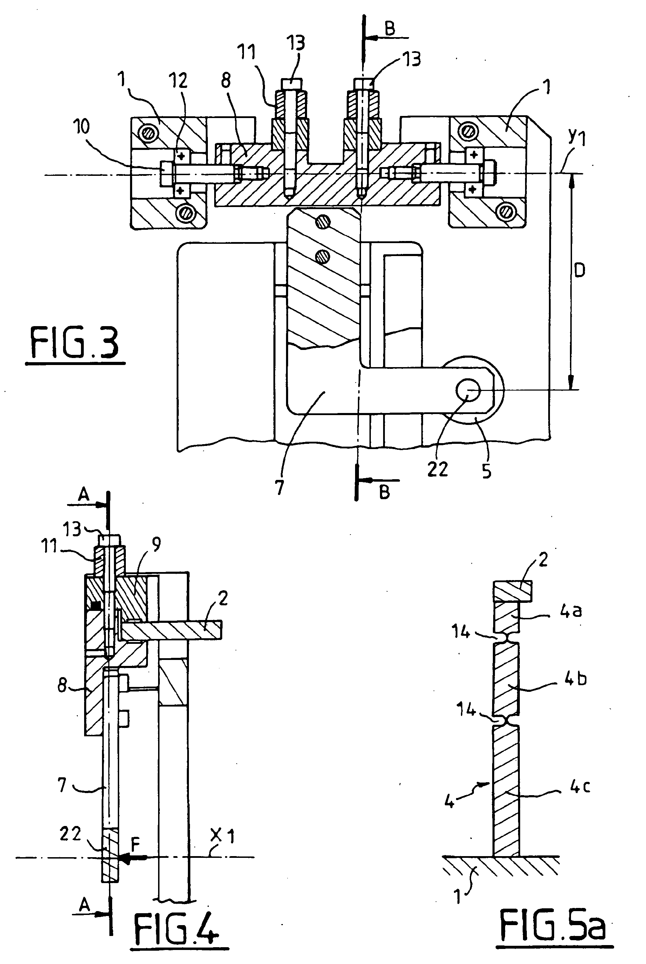

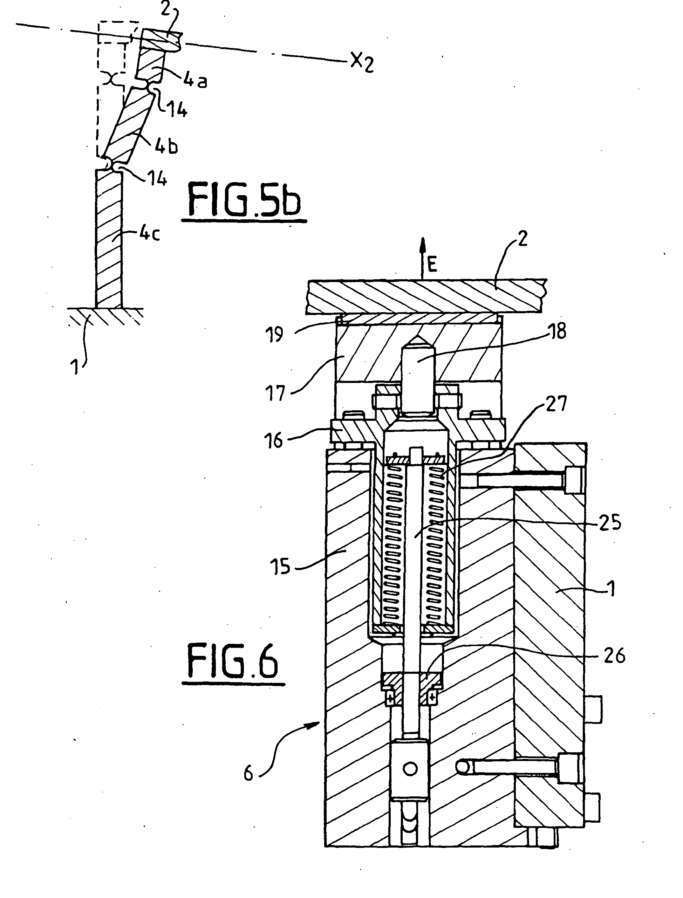

La figure 2 est une représentation en vue de trois quarts arrière d'un exemple de réalisation du dispositif de correction et de déformation d'un miroir selon l'invention. La seconde extrémité 21 du miroir 2 est supportée par une lame 4. La lame 4 comporte des strictions 14 afin de réaliser une liaison du type à double pivot d'axes parallèles entre le miroir 2 et le bâti 1. Le principe de fonctionnement de cette lame 4 sera décrit par la suite en relation avec les figures 5a et 5b. Les actionneurs 6 sont disposés entre les deux extrémités 20 et 21 du miroir afin d'appliquer des efforts sur différentes zones du miroir 2. Des patins 17 sont intercalés entre chaque actionneur 6 et le miroir 2. Dans cet exemple de réalisation, le miroir 2 est sensiblement horizontal et les actionneurs 6 exercent des efforts verticaux. On pourra évidemment réaliser l'invention en orientant différemment le miroir. On disposera cependant préférentiellement les actionneurs 6 sensiblement perpendiculairement à la portion de miroir où ils exercent leurs efforts.

Ce mode de réalisation de l'invention met donc en oeuvre un générateur de courbure unique appliqué à une seule extrémité du miroir 2, à savoir la première extrémité. Cette réalisation permet de simplifier la structure et d'obtenir une forme circulaire ou elliptique. On pourra cependant, selon un autre mode de réalisation de l'invention mettre en oeuvre deux générateurs de courbure afin d'appliquer deux couples selon deux axes non parallèles (par exemple un couple selon un axe Y1 et un couple selon un axe X3).

Les figures 3 et 4 sont des vues en coupe verticale selon les plans respectivement AA et BB illustrant le maintien du miroir par les mâchoires 8 et 9 et l'application du couple C sur la première extrémité 20 du miroir 2.

On voit sur la figure 3 que la mâchoire inférieure 8 est reliée au bâti 1 au moyen des axes 10 disposés de part et d'autre de la mâchoire et pivotant dans des boîtes à roulements 24 au moyen de roulements 12 d'axe de rotation Y1. L'utilisation de boîtes à roulements 24 est donnée ici à titre illustratif. On pourra évidemment également réaliser l'invention en utilisant des paliers ou tout autre moyen permettant de réaliser une liaison pivot entre les mâchoires et le bâti 1. Les vis 13 traversent la mâchoire supérieure 9 et sont vissées dans un filetage de la mâchoire inférieure 8. Les rondelles élastiques 11 sont intercalées entre chaque tête de vis 13 et la mâchoire supérieure 9 afin d'exercer un effort de serrage contrôlé et constant, permettant de maintenir les mâchoires serrées. Le bras de levier 7 est fixé à la mâchoire inférieure 8 au niveau de sa partie inférieure et est soumis à l'action du générateur d'effort 5 en un point 22 et selon un axe X1 orthogonal au plan de coupe. Une distance D sépare le point d'application 22 du générateur d'effort 5 sur le bras de levier 7 et l'axe de rotation Y1 de la mâchoire 8. Le générateur de courbure est réalisé en combinant le générateur d'effort 5 avec le bras de levier 7. L'effort F, orthogonal à l'axe Y1, est ainsi transformé en un couple C selon l'axe Y1. La valeur du couple ainsi exercé est:

$$C = D * F$$

La figure 5a est une vue en coupe de la fixation de la seconde extrémité 21 du miroir 2 sur le bâti. Le miroir 2 est fixé (par exemple par collage) à la lame 4. La lame 4 est disposée sensiblement verticale et comporte trois parties 4a, 4b et 4c séparées par des strictions 14. La partie supérieure 4a de la lame est solidaire de la seconde extrémité 21 du miroir et la partie inférieure 4c est solidaire du bâti 1 (non représenté sur cette figure). Les strictions 14 permettent de relier chaque partie de la lame tout en autorisant une rotation de l'une par rapport à l'autre selon des axes Y2 et Y3 parallèles à la largeur du miroir et perpendiculaires au plan de coupe. Une telle réalisation de la lame 4 permet avantageusement d'obtenir entre le miroir 2 et le bâti 1 une liaison du type pivot d'axe horizontal à double pivot. On entend par "liaison à double pivot" une liaison réalisée par deux pivots parallèles et autorisant une rotation horizontale et un déplacement horizontal orthogonal à l'axe de rotation du pivot. En effet, lorsque le miroir 2 est courbé, ses deux extrémités tendent à se rapprocher. Le miroir étant réalisé en un matériau fragile, il est essentiel d'autoriser un déplacement horizontal afin d'empêcher toute contrainte d'étirement du miroir.

La figure 5b est une vue similaire à la vue 5a, mais représentant la phase où le miroir est soumis à un couple C. La position de repos a été représentée en pointillés. On peut ainsi remarquer que la partie supérieure 4a reste perpendiculaire au miroir 2 et la partie inférieure 4c reste immobile par rapport au bâti 1. La partie médiane 4b s'est inclinée afin de permettre le déplacement et la rotation du miroir. Une telle structure est proche dans son comportement des articulations dites "en parallélogramme". Dans cette représentation, les déplacements du miroir et de la lame ont été exagérés afin de mieux illustrer le fonctionnement de la lame. Dans les conditions réelles d'utilisation de l'invention, ces déplacements sont discrets. Le déplacement vertical étant négligeable, on peut donc assimiler le déplacement final à la combinaison d'une rotation selon un axe Y2 et une translation horizontale selon un axe X2. Avantageusement l'utilisation d'une lame à striction permet de réaliser une liaison articulée à l'aide d'une unique pièce.

La figure 6 est une vue en coupe illustrant un actionneur de correction agissant sur le miroir.

L'actionneur de correction 6 se présente sous la forme d'un actionneur d'effort monodirectionnel comportant un corps 15 solidaire du bâti, une tête flottante 16, une tige filetée 25, un écrou 26 et des ressorts 27 reliant la tête flottante à la tige filetée et des ressorts (non visibles) reliant la tête flottante au corps 15. La tête 16 de l'actionneur 6 est dite "flottante" car elle est totalement libre en rotation comme en translation et est uniquement soumise à un effort E selon l'axe 18 de l'actionneur. Un tel actionneur est déjà connu et son mode de fonctionnement n'est pas l'objet de l'invention et ne nécessite pas d'être particulièrement décrit. On pourra cependant se référer à la demande de brevet européen EP1563205 qui décrit un tel actionneur et son mode de fonctionnement. Le principe de fonctionnement d'un tel actionneur est le suivant : l'écrou 26 est entraîné en rotation par un moyen moteur (non représenté), la rotation de l'écrou provoque un déplacement de la tige 25 et la compression (ou l'étirement des ressorts 27) qui permettent alors de générer un micro effort. De tels actionneurs présentent l'avantage d'être irréversibles, c'est à dire que même lorsqu'ils ne sont plus alimentés en énergie, ils continuent d'exercer leur effort. La tête flottante 16 est fixée au miroir 2 et uniquement soumise à un effort E de correction afin de ne pas brider les déplacements du miroir 2. De manière préférentielle, la tête flottante 16 est fixée au miroir 2 par l'intermédiaire d'un patin rigide 17 (par exemple en aluminium), surmonté d'un patin déformable 19, par exemple en polyuréthane. Un doigt 18 assure la liaison entre la tête flottante 16 et le patin 17. Une telle réalisation présente l'avantage d'éviter la formation d'une empreinte lorsque l'actionneur exerce un effort sur le miroir. Le dispositif selon l'invention comprend n actionneurs, le nombre n étant défini par les dimensions du miroir.

Le fonctionnement du dispositif est le suivant: on fixe les deux extrémités 20 et 21 du miroir 2 au bâti 1. On définit par le calcul le couple C à appliquer au miroir 2 pour lui faire adopter une première courbure. On déduit de ce calcul, la valeur de l'effort F à appliquer sur le bras de levier. On définit ensuite les efforts $E_1$ à $E_n$ à appliquer par les n actionneurs de correction 6 pour parvenir à la courbure souhaitée. On pourra bien entendu déterminer les couples et efforts à appliquer au miroir selon d'autres méthodes, par exemple par calibration ou par apprentissage. On pourra également asservir les actionneurs et générateurs de couple par une ou plusieurs boucles d'asservissement. Et mesurer au moyen de capteurs les correctifs d'efforts à apporter aux actionneurs.

On applique, au moyen du générateur d'effort 5, l'effort F sur le bras de levier 7. Cet effort F engendre le couple C appliqué aux mâchoires 8 et 9, au niveau de l'axe de rotation 10. Le miroir étant solidaire des mâchoires au niveau de sa première extrémité 20, le couple C est donc transmis à l'extrémité 20 du miroir afin de générer une pré-courbure. On applique ensuite, au niveau de chacun des n actionneurs de correction 6, un effort $E_1$ à $E_n$ (positif, négatif ou nul) afin de modifier la courbure générale et/ou locale du miroir. Le profil géométrique du miroir peut ainsi être modélisé par la somme des couples et efforts appliqués au miroir entre ses deux extrémités. Ainsi, un effort positif ou négatif peut augmenter ou diminuer la courbure locale et un effort nul conserve la pente du miroir.

Ainsi, dans l'invention, la courbure du miroir n'est pas définie par le déplacement des actionneurs mais par la combinaison d'un couple et d'efforts appliqués au miroir, ainsi que par les caractéristiques propres au miroir, c'est à dire son élasticité.

On pourra également apporter des correctifs au niveau de l'effort d'un ou plusieurs actionneurs afin de corriger un défaut du miroir ou du faisceau réfléchi.

L'invention concerne également un procédé de correction et de déformation d'un miroir mettant en oeuvre un dispositif tel que décrit précédemment. Selon ce procédé, on relie les deux extrémités 20 et 21 du miroir 2 à un bâti 1 et on applique un couple C à une seule extrémité 20 du miroir et au moins un effort E de correction entre les deux extrémités 20 et 21 du miroir 2 afin de corriger la géométrie du miroir.

Le miroir représenté dans cet exemple est un miroir en silicium, de forme rectangulaire, de 320 mm de longueur, 40 mm de largeur et 8 mm d'épaisseur. Un tel miroir sera associé à un actionneur de courbure et dix actionneurs de correction et permet d'obtenir une courbure elliptique de rayon de 50 m avec une précision permettant de limiter les erreurs de forme à des erreurs inférieures à 0,5 μrad. On pourra évidemment appliquer l'invention à des miroirs non-plans présentant une courbure initiale, des miroirs torpédos ou trapézoïdaux. On pourra également réaliser un dispositif de correction et de déformation d'un miroir ne comportant aucun générateur de courbure ou comportant un générateur de courbure à chaque extrémité du miroir. Enfin, sur les figures illustrant l'invention, les actionneurs de correction 6 ont été représentés comme étant disposés en ligne, on pourra évidemment réaliser l'invention en mettant en oeuvre des actionneurs répartis selon plusieurs lignes parallèles ou répartis en quinconce.

## Revendications

1. Dispositif de correction et de focalisation d'un faisceau par déformation d'un miroir (2) solidaire d'un bâti (1) comprenant des actionneurs de correction (6) répartis le long du miroir afin d'appliquer des efforts (E) sur différentes zones dudit miroir (2) et un générateur de courbure (5, 7), **caractérisé en ce que** le bâti (1) supporte le miroir (2) par l'intermédiaire de ses deux extrémités (20, 21), la première extrémité (20) étant reliée au bâti (1) par une liaison pivot (10, 12) d'axe horizontal (Y1) pour appliquer un couple (C) à ladite extrémité, la seconde extrémité (21) étant reliée au bâti par une liaison du type à double pivot d'axes parallèles (Y2, Y3) pour appliquer au points un effort de correction (E) entre les deux extrémités (20, 21) du miroir (2) et **en ce que** le générateur de courbure (5, 7) est capable d'appliquer un couple (C) à la première extrémité (20) du miroir (2).

2. Dispositif de correction et de focalisation d'un faisceau selon la revendication 1, où la liaison à double pivot est réalisée au moyen d'une lame (4) comportant des strictions (14).

3. Dispositif de correction et de focalisation d'un faisceau selon la revendication 1 ou 2, où la première extrémité (20) du miroir est maintenue par une mâchoire (8, 9) sur laquelle est fixé un bras de levier (7) et en ce que le générateur de courbure (5, 7) est réalisé au moyen d'un générateur d'effort (5) capable d'appliquer sur le bras de levier (7) un effort (F), orthogonal à l'axe (Y1) de la liaison pivot (10, 12).

4. Dispositif de correction et de focalisation d'un faisceau selon l'une des revendications précédentes, où chaque actionneur de correction (6) se présente sous la forme d'un générateur d'effort (6) comportant un corps (15) solidaire du bâti (1) et une tête flottante (16), fixée au miroir (2) et uniquement soumise à un effort (E) de correction.

5. Dispositif de correction et de focalisation d'un faisceau selon la revendication 4, où chaque tête flottante (16) est fixée au miroir (2) par l'intermédiaire d'au moins un patin déformable (19).

6. Dispositif de correction et de focalisation d'un faisceau selon la revendication 4 ou 5, capable d'appliquer l'effort (E) de correction sensiblement perpendiculairement au miroir (2).

## Claims

1. A correction and focussing device for a beam through the deformation of a mirror (2) integral with a frame (1) and comprising correction actuators (6) spaced along the mirror so as to apply stresses (E) to different zones of the mirror (2) and one curvature generator (5, 7), **characterised by** the fact that the frame (1) supports the mirror (2) at its two extremities (20, 21), the first extremity (20) being linked to the frame (1) by a pivot link (10, 12) with a horizontal axis (Y1) to apply a torque (C) to the said extremity, the second extremity (21) being linked to the frame by a link of the double pivot link type with parallel axes (Y2, Y3) applying at least one correction stress (E) between the two extremities (20, 21) of the mirror (2) and in that the curvature generator (5, 7) is able to apply a torque (C) to the first extremity (20) of the mirror (2).

2. A correction and focussing device for a beam according to Claim 1, wherein the double pivot link is made by means of a strip (4) incorporating strictions (14).

3. A correction and focussing device for a beam according to Claim 1 or 2, wherein the first extremity (20) of the mirror is held by jaws (8, 9) onto which a lever arm (7) is attached and in that the curvature generator (5, 7) is made by means of a stress generator (5) able to apply a stress (F) to the lever arm (7), orthogonal to the axis (Y1) of the pivot link (10, 12).

4. A correction and focussing device for a beam according to one of the previous Claims, wherein each correction actuator (6) is in the form of a stress generator (6) incorporating a body (15) integral with the frame (1) and a floating head (16) fixed to the mirror (2) and only subject to correction stress (E).

5. A correction and focussing device for a beam according to Claim 4, wherein each floating head (16) is fixed to the mirror (2) by means of at least one deformable footplate (19).

6. A correction and focussing device according to Claim 4 or 5, able to apply the correction stress (E) substantively orthogonal to the mirror (2).


**Patentansprüche**

1. Vorrichtung zur Korrektur und Fokussierung eines Strahls durch Verformung eines fest mit einem Rahmen (1) verbundenen Spiegels (2), umfassend Korrektur-Stellglieder (6), die entlang des Spiegels verteilt sind, um Kräfte (E) auf verschiedene Bereiche des genannten Spiegels (2) aufzubringen, und einen Krümmungs-Generator (5, 7) **dadurch gekennzeichnet, dass** der Rahmen (1) den Spiegel (2) mit Hilfe seiner beiden Enden (20, 21) hält, wobei das erste Ende (20) mit dem Rahmen (1) durch eine Drehverbindung (10, 12) mit horizontaler Achse (Y1) verbunden ist, um ein Drehmoment (C) an dem genannten Ende aufzubringen, wobei das zweite Ende (21) mit dem Rahmen durch eine Doppelgelenkverbindung mit parallelen Achsen (Y2, Y3) verbunden ist, um eine Korrektur (E) zwischen den beiden Enden (20, 21) des Spiegels (2) am Punkt durchzuführen, und in dass der Krümmungs-Generator (5, 7) in der Lage ist, ein Drehmoment (C) am ersten Ende (20) des Spiegels (2) aufzubringen.

2. Vorrichtung zur Korrektur und Fokussierung eines Strahls nach Anspruch 1, bei der die Doppelgelenkverbindung mittels einer Einschnürungen (14) umfassende Lamelle (4) ausgeführt ist.

3. Vorrichtung zur Korrektur und Fokussierung eines Strahls nach Anspruch 1 oder 2, bei der das erste Ende (20) des Spiegels von einer Klaue (8, 9) gehalten wird, auf welcher ein Hebelarm (7) befestigt ist, und der Krümmungs-Generator (5, 7) mittels eines Kraft-Generators (5) erzielt wird, der in der Lage ist, eine Kraft (F) senkrecht zur Achse (Y1) der Drehverbindung (10, 12) auf den Hebelarm (7) aufzubringen.

4. Vorrichtung zur Korrektur und Fokussierung eines Strahls nach einem der vorhergehenden Ansprüche, bei der jedes Korrektur-Stellglied (6) sich in der Form eines Kraft-Generators (6) darstellt, umfassend einen fest mit dem Rahmen (1) verbundenen Körper (15) und einen schwimmenden Kopf (16), der am Spiegel (2) befestigt ist und nur einer Korrektur-Kraft (E) unterworfen wird.

5. Vorrichtung zur Korrektur und Fokussierung eines Strahls nach Anspruch 4, bei der jeder schwimmende Kopf (16) am Spiegel (2) mit Hilfe wenigstens einer verformbaren Unterlage (19) befestigt ist.

6. Vorrichtung zur Korrektur und Fokussierung eines Strahls nach Anspruch 4 oder 5, die in der Lage ist, die Korrektur-Kraft (E) im Wesentlichen senkrecht auf den Spiegel (2) aufzubringen.

FIG.1

EP 1 925 959 B1

FIG.2

FIG.3

FIG.4

FIG.5a

## FIG.5b

## FIG.6

**EP 1 925 959 B1**

## RÉFÉRENCES CITÉES DANS LA DESCRIPTION

**Documents brevets cités dans la description**

- US 4655563 A
- EP 1563205 A